# EUROPÄISCHE PATENTSCHRIFT

(11) **EP 4 136 863 B1**
(45) Veröffentlichungstag und Bekanntmachung des Hinweises auf die Patenterteilung: **10.09.2025**
(21) Anmeldenummer: 21745755.5
(22) Anmeldetag: 15.07.2021
(51) Int. Cl.: H04L 41/14, H04W 4/40, B60R 16/023, H04L 41/142, H04L 43/50, H04L 9/40, H04L 67/5651

(54) **VERFAHREN UND WIEDERGABEEINHEIT ZUR WIEDERGABE VON GESICHERTEN NACHRICHTEN**
METHOD AND REPRODUCTION UNIT FOR REPRODUCING PROTECTED MESSAGES
PROCÉDÉ ET UNITÉ DE REPRODUCTION POUR REPRODUIRE DES MESSAGES PROTÉGÉS

(30) Priorität: 17.07.2020 DE 102020118960
(43) Veröffentlichungstag der Anmeldung: 22.02.2023
(73) Patentinhaber: dSPACE GmbH, 33102 Paderborn (DE)
(72) Erfinder: MÜLLER, Björn, 33102 Paderborn (DE)
(86) Internationale Anmeldenummer: PCT/EP2021/069696
(87) Internationale Veröffentlichungsnummer: WO 2022/013335

(56) Entgegenhaltungen:
- WO-A1-2020/165067
- US-A1- 2015 172 298
- US-A1- 2017 331 699

## Beschreibung

Die Erfindung betrifft ein Verfahren und eine Wiedergabeeinheit zum Versenden aufgezeichneter gesicherter Nachrichten über ein Nachrichtensystem an ein zu testendes Empfängergerät, insbesondere ein zu testendes Steuergerät.

Im Bereich der Bussimulation für den Test von Steuergeräten, beispielsweise im automotiven Bereich, liegt der Fokus darauf, die Buskommunikation eines oder mehrerer Steuergeräte möglichst realitätsnah nachzubilden. Dies erfolgt beispielsweise im Rahmen eine Hardware-in-the-Loop (HIL)-Simulation.

Die US20170331699A1 beschreibt ein Steuergerät, welches über einen CAN-Bus mit einem HIL-Simulator und mit einem Benutzer-Terminal verbunden ist und welches die in der HIL-Simulation produzierten Daten nach einer bestimmten Reihenfolge fragmentiert und in fragmentierten Paketen an das Benutzer-Terminal versendet, um Beschränkungen im Hinblick auf die übertragbare Datenmenge durch den CAN-Bus zu umgehen.

Im Bereich der Steuergeräte (ECU)-Absicherung ist auch die Manipulation der Buskommunikation relevant.

Die Buskommunikation kann dabei durch eine "Live"-Simulation in einer Testumgebung (z.B. mittels der Produkte MicroAutobox, VEOS oder SCALEXIO der dSPACE GmbH für eine Offline- bzw. eine HIL-Simulation) oder durch Wiedergabe (Replay) einer aufgenommenen Buskommunikation nachgebildet werden.

Im einfachsten Fall ist für die in Fahrzeugen verwendete Kommunikation vorgesehen, dass die übertragenen Signale als alleinige Nutzdaten in Bus- oder Netzwerknachrichten versendet werden.

Neue Standards (AUTOSAR ≥4.2.1 sowie FIBEX ≥4.1.2) erweitern dieses jedoch, so dass die Nutzdaten zusätzlich authentifiziert oder geschützt werden (siehe z.B. Secure Onboard Communication, Cryptograpgic PDU, Transport Layer Security, IPsec (Internet Protocol Security)).

Das Loggen der Buskommunikation kann beispielsweise durch Werkzeuge der dSPACE GmbH (Bus Navigator oder Autera) vorgenommen werden. Solche Werkzeuge sind oft auch in der Lage die aufgenommene und abgespeicherte Buskommunikation wiederzugeben.

Die neuen Verschlüsselungs- und Authentifizierungsalgorithmen der oben genannten Standards zielen darauf ab, sogenannte Replay-Attacken zu verhindern. Mit solchen Algorithmen gesicherte Buskommunikation kann daher nicht ohne Weiteres für die Stimulation von Steuergeräten mittels einfacher Wiedergabe (Replay) verwendet werden.

In der Regel enthalten die im Fahrzeug aufgenommenen oder mit einem Simulator zu Testzwecken simulierten gesicherten Nachrichten Informationen bestehend aus Header, Nutzdaten, monoton steigendem Zählerwert und Authentifizierungscode (verschlüsselt).

Das Problem bei der Wiedergabe besteht darin, dass zwar die Nutzdaten korrekt sein mögen, dass aber aller Wahrscheinlichkeit nach der Zählerwert der aufgenommenen Daten nicht zum Zählerwert des zu testenden Steuergeräts passt (da der Counter monoton steigend ist, kann dieser auch nicht verändert werden). Selbst wenn dieser zurückgesetzt werden könnte, passt der für die Authentifizierung erstellte Authenticatorwert (auch Authenticator) nicht mehr zum Zählerwert, da sich der verschlüsselte Authenticatorwert aus einem anhand der Nutzdaten ermittelten Wert und dem Zählerwert zusammensetzt.

Falls dieses Problem bisher in den frühen Entwicklungsphasen auftrat, wurde üblicherweise die Authentifizierung im Empfängersteuergerät deaktiviert. In diesem Fall kann aber die Authentifizierung nicht mehr getestet werden.

Eine Lösung dieses Problems ist in der PCT-Anmeldung mit dem amtlichen Aktenzeichen PCT/EP2020/053254 beschrieben, wonach Authenticator und Zählerwert aus den gesicherten Nachrichten entfernt und durch neu bestimmte Werte ersetzt werden.

Schwierigkeiten bereitet hierbei jedoch, dass die Nachrichten auf dem Bus bzw. im Netzwerk in serialisierter Form verschickt werden. In der serialisierten Form bestehen die Nachrichten nur noch aus Daten, ohne Information darüber, um was für Daten es sich handelt und welche Daten in der Nachricht an welcher Stelle stehen, sodass ohne eine Deserialisierung nicht ersichtlich ist, welche Daten zu ersetzen sind. Die Umwandlung der vollständigen Nachrichten aus der serialisierten Form in deserialisierte und decodierte Nachrichten, um die zu ersetzenden Daten überhaupt identifizieren zu können, kostet Zeit und Rechenleistung.

Vor diesem Hintergrund besteht die Aufgabe der Erfindung darin, ein Verfahren und eine Wiedergabeeinheit anzugeben, die den Stand der Technik weiterbildet.

Die Aufgabe wird durch das anfangs genannte Verfahren und die genannte Wiedergabeeinheit gelöst, wobei das Verfahren die Schritte aufweist:
- Bereitstellen erster gesicherter und noch serialisierter Nachrichten aus ersten gesicherten Nachrichtenpaketen, zur Verarbeitung in einer Wiedergabeeinheit, wobei die ersten Nachrichten durch die Nutzlast der Nachrichtenpakete gegeben sind und ihrerseits Nutzdaten, einen ersten Zählerwert und einen ersten Authenticator aufweisen, wobei in der Wiedergabeeinheit folgende Informationen hinterlegt, bzw. der Wiedergabeeinheit zur Verfügung gestellt sind (d.h. die Informationen sind entweder in einem der Wiedergabeeinheit zugeordneten Speicher gespeichert oder die Wiedergabeeinheit hat Zugriff auf die in der Testumgebung gespeicherten Informationen):
   ∘ Mindestens Teile einer Kommunikationsbeschreibung für das zu testende Empfängergerät und/oder ein Algorithmus zur Dateninterpretation,
   ∘ Ein zweiter Zählerwert für das zu testende Empfängergerät,
   ∘ Informationen zur Verschlüsselung und ein entsprechender Schlüssel,
- mittels der Wiedergabeeinheit:
   ∘ in den ersten Nachrichten: Reduzieren der durch die serialisierten ersten Nachrichten gegebene Datenmenge mittels Identifizieren der Position der Nutzdaten oder der Position des ersten Authenticators in den ersten Nachrichten und Entfernen mindestens des ersten Authenticators und ggf. des ersten Zählerwertes aus den ersten Nachrichten,
   ∘ Deserialisieren und Decodieren der reduzierten ersten Nachrichten und Erstellen zweiter gesicherter Nachrichten durch Hinzufügen jeweils des zweiten Zählerwerts, bzw. ggf. Ersetzten des ersten Zählerwertes durch den zweiten Zählerwert, und Erstellen und Hinzufügen jeweils eines zweiten Authenticators unter Verwendung des zweiten Zählerwerts, der Informationen zur Verschlüsselung sowie des Schlüssels und unter Verwendung der Kommunikationsbeschreibung oder der mittels Anwendung des Algorithmus zur Dateninterpretation gewonnenen Informationen,
- Serialisieren der zweiten gesicherten Nachrichten und Versenden entsprechender Nachrichtenpakete an das zu testende Empfängergerät.

Kern des erfindungsgemäßen Verfahrens ist es, dass mittels der erfindungsgemäßen Wiedergabeeinheit die aufgenommenen gesicherten Nachrichten vor der Wiedergabe so manipuliert werden, dass ein Empfangsgerät diese als korrekte Nachrichten annimmt, wobei eine Datenreduktion der noch serialisierten ersten Nachrichten erfolgt, so dass für die Manipulation der wiederzugebenden ersten Nachrichten diese nicht voll umfänglich deserialisiert und decodiert werden müssen. Generell werden Nachrichten serialisiert und dann in "Nachrichtenpaketen" über das Nachrichtensystem verschickt. Im Allgemeinen ist mit "Serialisierung" eine Codierung der Daten und die Organisation der Daten in auf dem Nachrichtensystem zu verschickenden Nachrichtenpaketen mit Header, Nutzlast (Payload) und Trailer Segment gemeint, bzw. mit "Deserialisierung" der umgekehrte Prozess.

In dieser Anmeldung wird Serialisierung bzw. Deserialisierung meist nur auf einen Teil dieses Prozesses bezogen, nämlich auf die Serialisierung oder Deserialisierung der Nachrichten, welche sich in der Nutzlast der über das Nachrichtensystem verschickten Nachrichtenpakete befinden. Dabei werden bei der hier betrachteten "Serialisierung" Informationen zur Einordnung der Daten, aus den Nachrichten entfernt werden, bzw. bei der "Deserialisierung" hinzugefügt.

Beispielsweise könnten die Daten zu physikalischen Werten in einer Nachricht in deserialisierter und interpretierter Form folgendermaßen aussehen:
Temperatur 24°C
Geschwindigkeit 123 km/h
Höhe 320 ü.n.N.
Authenticator 345678 → korrekt.

Eine codierte Form der deserialisierten Daten wäre beispielsweise:
Temperatur 10
Geschwindigkeit B24
Höhe 8AF
Authenticator 835D.

Nach der Serialisierung wäre der Inhalt der Nachricht (Nutzdaten) gegeben durch:
10B248AF835D.

Das erfindungsgemäße Wiedergabewerkzeug (die Wiedergabeeinheit) identifiziert und trennt einzelne Bestandteile der Nachrichten schon vor der Deserialisierung und reduziert so die Menge der zu deserialisierenden und zu decodierenden Daten.

Bevorzugt werden auf Basis der in der Kommunikationsbeschreibung enthaltenen Informationen und der durch den Nutzer festgelegten Informationen zur Verschlüsselung für die Wiedergabe ein neuer steigender Zählerwert und ein den Nutzdaten, dem Zählerwert und dem Verschlüsselungsalgorithmus entsprechender neuer und passender Authentifizierungscode (Authenticator) generiert. Die Informationen zur Verschlüsselung hängen davon ab, wo die Erfindung eingesetzt wird, bzw. welcher Schutzmechanismus vorliegt (Beispiele sind SecOC oder IPSec,...). Sie umfassen beispielsweise den Verschlüsselungsalgorithmus und evtl. weitere den Verschlüsselungsalgorithmus betreffende Informationen, z.B., worauf der Algorithmus angewendet wird (Bit oder Byte)). Mit diesen Informationen wird eine neue komplette Nachricht generiert, bzw. die ursprüngliche erste (aufgrund des veralteten Zählerwerts/Authenticators obsolete) Nachricht zu einer zweiten Nachricht wiederaufbereitet, welche durch das Empfängergerät (d.h. das zu testende (Steuer)Gerät) akzeptiert wird.

Der aktuelle Zählerwert (z.B. in Form eines sogenannten Freshnessvalues oder einer Sequenznummer) für das zu testende Steuergerät liegt in der Regel global vor und ist somit der Testumgebung (d.h. dem HIL-Simulator oder dem Offline-Simulator oder einem mit dem Simulator verbundenen Host-PC) bekannt.

Um die Manipulation der ersten gesicherten Nachrichten zur Erstellung zweiter gesicherter Nachrichten überhaupt zu ermöglichen, werden in der Wiedergabeeinheit entweder (benötigte Anteile) einer Kommunikationsbeschreibung (z.B. (mindestens Teile einer) Kommunikationsmatrix, auch K-Matrix genannt) oder ein Algorithmus zur Interpretation der in den Nachrichten erhaltenen Daten hinterlegt, sodass der Zählerwert und der Authenticator in den Nachrichten identifiziert werden können.

In einer ersten beispielhaften Ausführungsform erfolgt das Identifizieren der Nutzdaten mittels einer aus der Kommunikationsbeschreibung extrahierten Lookup-Tabelle, wobei die Lookup-Tabelle mindestens die Nachrichten-ID, die Position der Nutzdaten und die Länge der Nutzdaten enthält. Ggf. enthält die Lookup-Tabelle auch die Information über die Position des Zählers in den ersten gesicherten und noch serialisierten Nachrichten. Weitere Informationen der K-Matrix wie Sender, Empfänger, Initialwerte, Datentyp, Triggerung, CompuMethod, etc. werden außer Acht gelassen.

Die Lookup-Tabelle wird bevorzugt vor der Durchführung der oben aufgeführten erfindungsgemäßen Verfahrensschritte automatisiert aus der Kommunikationsbeschreibung erstellt und in der Wiedergabeeinheit oder in der Testumgebung mit Zugriff durch die Wiedergabeeinheit hinterlegt. Besonders bevorzugt werden die Einträge der Lookup-Tabelle nach der Häufigkeit des Auftretens einer Nachricht geordnet, sodass häufig auftretende Nachrichten an besonders schnell zugänglicher Position in der Tabelle aufgeführt sind. Die Häufigkeit einer Nachricht kann beispielsweise aus Informationen in der Kommunikationsmatrix abgeleitet werden oder im Laufe des Verfahrens anhand einer geführten Statistik zum Eingang der Nachrichten dynamisch angepasst werden. Eine solche Statistik ist besonders für eine Service-basierte Kommunikation sinnvoll. Eine weitere Möglichkeit, die Lookup-Tabelle mit Hilfe der Kommunikationsbeschreibung zu erstellen besteht darin, zunächst unter Verwendung der Kommunikationsbeschreibung einen ausführbaren Kommunikationscode für die Simulation zu generieren und jeweils nur die erste Nachricht oder, bei Multiplex-Nachrichten, den ersten Nachrichtentyp zu jeder Nachrichten-ID zu deserialisieren, um in dieser ersten deserialisierten Nachricht, bzw. diesem ersten deserialisierten Nachrichtentyp, die Position des MACs zu bestimmen und mindestens diese Information in der auf diese Weise zu erstellenden Lookup-Tabelle zu hinterlegen.

In einer zweiten beispielhaften Ausführungsform erfolgt das Identifizieren des ersten Authenticators dadurch, dass die serialisierten Daten der Nachrichtenpakete mit Hilfe des Algorithmus zur Dateninterpretation durchsucht werden. Der Algorithmus zur Dateninterpretation ist dabei durch einen geeigneten Algorithmus zur Erkennung verschlüsselter Informationen gegeben, wobei diese Erkennung beispielsweise dadurch erfolgt, dass der Algorithmus nach zusammenhängenden Werten mit maximaler Entropie sucht.

Die Erkennung der verschlüsselten Information beruht darauf, dass alle aktuellen Verschlüsselungsmethoden einen möglichst großen Entropiewert der verschlüsselten Information erzeugen (= möglichst große "Unordnung"). Es soll so verhindert werden, dass durch Statistiktests (n-Gramme) eine Entschlüsselung möglich ist. Zur Erkennung der verschlüsselten Information muss daher nur in den Nutzdaten der ersten noch serialisierten Nachrichten mit einem Symbolfenster (bevorzugt einem Symbolfenster vorgegebener Größe entsprechend der Länge des Authenticators) nach zusammenhängen Werten mit maximaler Entropie gesucht werden.

Sofern die Positionen von Authenticator und Nutzdaten statisch, d.h. für jede Nachricht fest vorgegeben sind, muss die Suche nach dem Authenticator nicht kontinuierlich für jede Nachricht ausgeführt werden, sondern nur einmalig für jede Nachrichtenidentität.

Bevorzugt kann auch bei dieser Ausführungsform eine Lookup-Tabelle angelegt werden, aus welcher sich ermitteln lässt, wo sich die Nutzdaten befinden, ohne dass eine vorherige aufwendige Suche oder Deserialierung notwendig wird.

Eine weitere Zeitersparnis ergibt sich, wenn der Algorithmus zur Dateninterpretation, d.h. zur Identifizierung des Authenticators, in der Hardware des Nachrichtensystems implementiert ist, z.B. direkt bei bzw. hinter dem Controller, welcher die über das Nachrichtensystem verschickten Nachrichtenpakete empfängt und bereits teilweise zerlegt. Dieser Controller kann ein handelsüblicher Controller (etwa ein Infineon Aurix) sein oder aber beispielsweise in einem FPGA in einem sogenannten Softcore implementiert sein, wobei der Algorithmus zur Dateninterpretation dann in der restlichen Fläche des FPGA implementiert werden könnte. Der Algorithmus zur Dateninterpretation könnte aber auch in einen zusätzlichen FPGA oder ASIC integriert werden, um ihn auf die vom Controller aus den Nachrichtenpaketen extrahierten Nachrichten anzuwenden. Auch der Controller ist hier nicht unbedingt als Bestandteil der Wiedergabeeinheit anzusehen, ist aber Teil der Testumgebung und von der Wiedergabeeinheit ansteuerbar.

Der Vorteil, zusätzlich mit dem Algorithmus zur Dateninterpretation zu arbeiten liegt darin, dass die Implementierung des Algorithmus in der Hardware eine zusätzliche Zeitersparnis ermöglicht.

In einer weiteren Ausführungsform der Erfindung ist der zweite Zählerwert durch den aktuellen Zählerwert des zu testenden Steuergeräts gegeben. In einer alternativen Ausführungsform ist der zweite Zählerwert durch einen Benutzer vorgebbar oder wird nach einem vorgegebenen Algorithmus zur Zählerberechnung berechnet.

Die Wiedergabeeinheit enthält bevorzugt alle Komponenten und/oder Module, welche zur Generierung dieser Werte und dem anschließenden Zusammenfügen notwendig sind. Insbesondere zählen dazu der Log-File Import, der K-Matrix Import, die Deserialisierung/Serialisierung, die Zählerwertgenerierung und der Verschlüsselungsalgorithmus. Alternativ können die Komponenten und/oder Module aber auch nur der Wiedergabeeinheit die benötigten Informationen zur Verfügung stellen, ohne in der Wiedergabeeinheit, sondern beispielsweise andernorts in der Testumgebung, implementiert zu sein.

Die oben genannten Komponenten und Module sind einzeln als Teil unterschiedlicher Bussimulationssoftware z.B. RTI CAN MM, FlexRay Configuration Package, Ethernet Configuration Package oder dem Bus Manager) bzw. Bus-Experimentiersoftware (Bus Navigator) bekannt. Ein Unterschied zum Stand der Technik besteht darin, dass in den typischen Anwendungsfällen die Nutzdaten durch ein Offline- oder Echtzeitmodell erzeugt werden, während diese bei dem erfindungsgemäßen Verfahren aus einem Log-File extrahiert, unter Verwendung der erfindungsgemäßen Identifizierung auseinandergenommen und in Kombination mit neuen Inhalten wieder zusammengesetzt werden.

In einer Ausführungsform der Erfindung werden die Nutzdaten, der erste Zählerwert und der erste Authenticator einer Nachricht über mindestens zwei Nachrichtenpakete verteilt versendet (beispielsweise enthält die Nutzlast eines ersten Nachrichtenpakets den Authenticator und die Nutzlast eines zweiten Nachrichtenpakets Zählerwert und Nutzdaten einer Nachricht). In einer anderen Ausführungsform der Erfindung enthält ein Nachrichtenpaket (als Nutzlast des Nachrichtenpakets) die gesamte Nachricht mit Nutzdaten, Zählerwert und Authenticator.

Ob die Nachrichten mit Nutzdaten, Zählerwert und Authenticator in einem einzigen Nachrichtenpaket oder über zwei oder mehrere Nachrichtenpakete verteilt versendet werden, wird durch den verwendeten Sicherheitsmechanismus bestimmt. Bei SecOC ist beispielsweise Ersteres, bei IPsec zuweilen Letzteres der Fall. Wichtig ist hierbei nur, dass eine durch einen bestimmten ersten Authenticator gesicherte Nachricht zu Wiedergabezwecken mit einem zweiten, aktuellen Authenticator und mit einem entsprechendem zweiten Zählerwert versehen wird, die den ersten obsoleten Authenticator und den obsoleten ersten Zählerwert ersetzen.

Das Empfängergerät ist durch ein reales Steuergerät gegeben - beispielsweise in einem HIL-Test - oder durch ein virtuelles Steuergerät gegeben, wenn die Buskommunikation im Rahmen einer virtuellen Absicherung getestet werden soll.

Mit virtueller Absicherung ist hier das Testen von Steuergeräten durch Simulation des Steuergerätenetzwerks (und seiner Umgebung, z.B. in Form eines Fahrzeugs und einer Verkehrssituation) ohne konkrete Hardware und mit Hilfe eines entsprechenden Offline-Simulators gemeint, welcher z.B. auch das Zeitverhalten und die Kommunikation eines Steuergeräteverbundes nachbildet. Ein virtuelles Steuergerät ist quasi eine in Software implementierte Vorstufe eines Steuergeräts und enthält in der Regel schon den finalen Seriencode. Es benötigt jedoch noch nicht die echte Hardware des Steuergerätes, wenngleich das zukünftige Betriebssystem in der Regel bereits simuliert wird und realistisches Planungsverhalten basierend auf den für die Funktionalitäten definierten Zeit- und Triggerinformationen nachgebildet ist, sodass das virtuelle Steuergerät z.B. an einen simulierten Bus angeschlossen werden kann (https://www.dspace.com/de/gmb/home/news/engineers-insights/blog-virtuals-ecus-1808.cfm ).

Je nach Bedarf ist das Nachrichtensystem gegeben durch ein Bus-Kommunikationssystem oder ein Netzwerk oder eine Kombination aus Bussystem und Netzwerk, insbesondere durch ein automotives Nachrichtensystem, wobei das Nachrichtensystem real vorliegt oder im Rahmen einer virtuellen Absicherung simuliert wird. Auch eine Kombination eines virtuellen Steuergeräts mit einem real vorliegenden Nachrichtensystem oder eines real vorliegen Steuergeräts mit einem simulierten Nachrichtensystem ist über eine entsprechende Testumgebung möglich.

In einer weiteren Ausführungsform der Erfindung sind auch die Nutzdaten der ersten gesicherten Nachrichten unter Verwendung des ersten Zählerwerts verschlüsselt und werden in der Wiedergabeeinheit zunächst entschlüsselt und anschließend mittels der Verschlüsselung und des zweiten Zählerwerts wieder verschlüsselt. Welche Anteile der Nachricht zu ent- und zu verschlüsseln sind, ist bevorzugt ebenfalls in den Informationen zur Verschlüsselung enthalten.

In einer Ausgestaltung des erfindungsgemäßen Verfahrens wird dieses auf sogenannte Services (Dienste) angewendet, die in gesicherten Nachrichten übertragen werden, und ermöglicht so auch die Wiedergabe eines sogenannten Service Discovery, beispielsweise von Netzwerk- und/oder Systemdiensten.

Bevorzugt wird ermöglicht, dass bei der Manipulation, d.h. dem Erstellen der zweiten gesicherten Nachrichten auch gezielt Fehler eingestreut werden. Beispielsweise können Informationen zur Verschlüsselung zusätzliche Informationen umfassen, um die zweiten gesicherten Nachrichten zu Testzwecken derart zu erstellen, dass sie vom Empfängergerät als fehlerhaft erkannt werden sollten. Dadurch lassen sich auch die Sicherheitsmechanismen testen.

Die Aufgabe wird auch gelöst durch eine Wiedergabeeinheit mit den Merkmalen des unabhängigen Anspruchs 10 zur Durchführung des erfindungsgemäßen Verfahrens gelöst.

Die erfindungsgemäße Wiedergabeeinheit erweitert die Funktion der Wiedergabeeinheiten aus dem Stand der Technik insofern, als die versendeten Nachrichten nun nicht mehr nur aus abgespeicherten Nachrichten sondern quasi aus neu generierten bzw. wiederaufbereiteten Nachrichten bestehen, welche teilweise die alten Information (insbesondere die Nutzdaten) enthalten, aber mit neuen Informationen (Authenticator und/oder Zählerwert) verändert werden, sodass sie von dem Empfängergerät akzeptiert oder gezielt verworfen werden, wobei für die Veränderung ein minimaler Aufwand an Zeit und Rechenleistung für die Deserialisierung und Decodierung betrieben wird, indem relevante Anteile der Nachrichten schon vor der Deserialisierung identifiziert werden.

Bevorzugt ist die Wiedergabeeinheit als (Zusatz-)Einheit für einen HIL-Simulator (in Form von Hardware mit entsprechender Software) und/oder für einen Simulator zur virtuellen Absicherung (als reine Softwareeinheit bzw. zusätzliches Programm) ausgestaltet.

Durch die Erfindung wird es ermöglicht, in effizienter Weise abgesicherte Kommunikation im Fahrzeug aufzunehmen und für spätere Absicherungen, z.B. am HIL aber auch bei der virtuellen Absicherung, zu nutzen.

Die Erfindung wird nachfolgend unter Bezugnahme auf die Zeichnungen näher erläutert.

Zur Verdeutlichung der Beschreibung zeigen die Figuren:
- Figur 1: eine gesicherte Nachricht,
- Figur 2: eine schematische Darstellung der Secure Onboard Communication gemäß AUTOSAR 4.2.1.
- Figur 3: eine schematische Darstellung üblicher Steuergerätekommunikation bei Verwendung einer gesicherten Kommunikation,
- Figur 4: das Speichern versendeter Daten mittels eines Datenloggers,
- Figur 5a: das erfindungsgemäße Verfahren unter Verwendung einer extrahierten Lookup-Tabelle.
- Figur 5b: das erfindungsgemäße Verfahren unter Verwendung eines Algorithmus zur Dateninterpretation.
- Figur 6: Vorgehen des Algorithmus zur Dateninterpretation.

Die folgende Beschreibung der Erfindung orientiert sich an der Secure Onboard Communication (SecOC), lässt sich aber auch auf andere Verfahren übertragen.

Bei der Authentifizierung in der SecOC ändert sich die Übertragung auf dem Medium gegenüber ungesicherter Nachrichtenübertragung, da neben den Nutzdaten nun weitere Daten in der Nachricht übertragen werden, welche es dem Empfänger ermöglichen, festzustellen, ob die empfangenen Daten valide sind oder nicht. Aus der ursprünglichen PDU (Protocol Data Unit) welche nur die Nutzdaten enthielt wird nun eine sogenannte "Secured PDU".

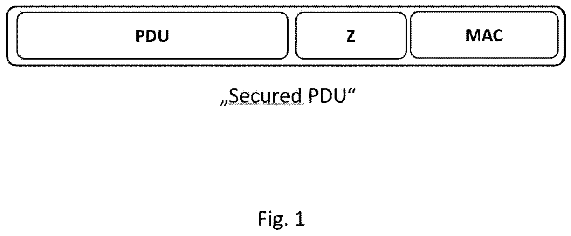

Figur 1 zeigt den Aufbau einer solchen gesicherten Nachricht. Bei einer geschützten Kommunikation nach dem SecOC Standard gemäß AUTOSAR und FIBEX wird die "Secured PDU" übertragen. Diese setzt sich zusammen aus den weiterhin unverschlüsselten (aber meist codierten) Nutzdaten PDU, einem Zählerwert Z und einem verschlüsselten Authenticator MAC. Die Nutzdaten PDU sind nicht verschlüsselt, aber ohne Kenntnis der Kommunikationsbeschreibung, z.B. in Form der sogenannten K-Matrix oder Communication Matrix, fehlt die Information, wo welche Daten zu finden sind (Zählerwert Z (Bei SecOC auch "FreshnessValue" genannt), Authenticator MAC, Nutzdaten PDU), weil die Daten in der Nachricht noch serialisiert sind. Ohne diese Information ist eine Interpretation der Daten aufwändig.

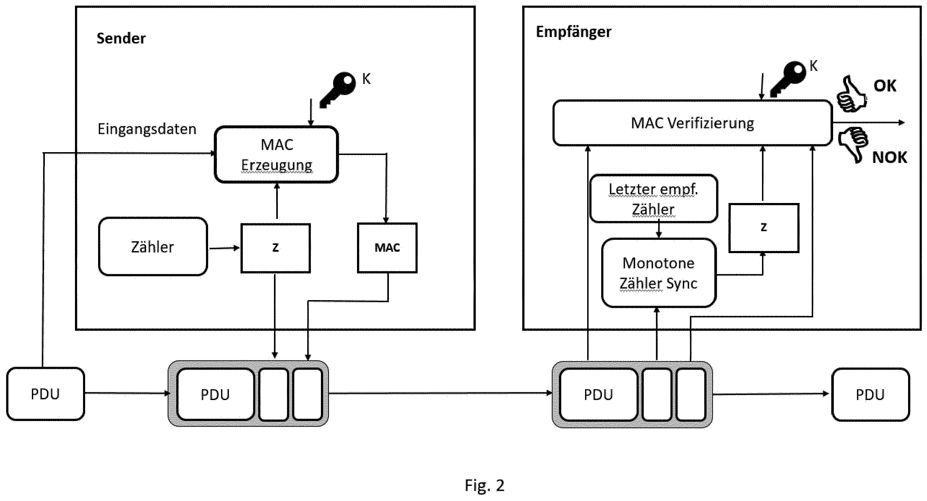

Die gesicherte Nachricht enthält neben den weiterhin unverschlüsselten Nutzdaten (nun PDU oder auch "Authentic PDU" genannt) einen Zählerwert Z (auch "Freshness Value" genannt) und einen Authenticator ("Message Authentication Code" MAC). Dieser Authenticator MAC ist ein verschlüsselter Wert, der mittels eines Schlüsselalgorithmus, eines geheimen Schlüssels K, der Nutzdaten PDU und des Zählerwertes Z berechnet wird. Dieses Vorgehen ist in Figur 2 gezeigt. Bei dem Zählerwert Z handelt es sich um einen kontinuierlichen, monoton steigenden Zählerwert. Auf der Senderseite werden der Zählerwert Z und Informationen/Daten aus den Nutzdaten PDU verwendet, um den Authenticator MAC zu erzeugen. Vom Sender wird dann eine Nachricht mit Nutzdaten PDU, Zählerwert Z und Authenticator MAC erstellt. Auf der Empfängerseite werden der Authenticator MAC und der Zählerwert Z überprüft und anhand der Prüfung entschieden, ob die Nachricht valide ist oder nicht, bzw. ob die Nutzdaten verwendet werden dürfen oder nicht.

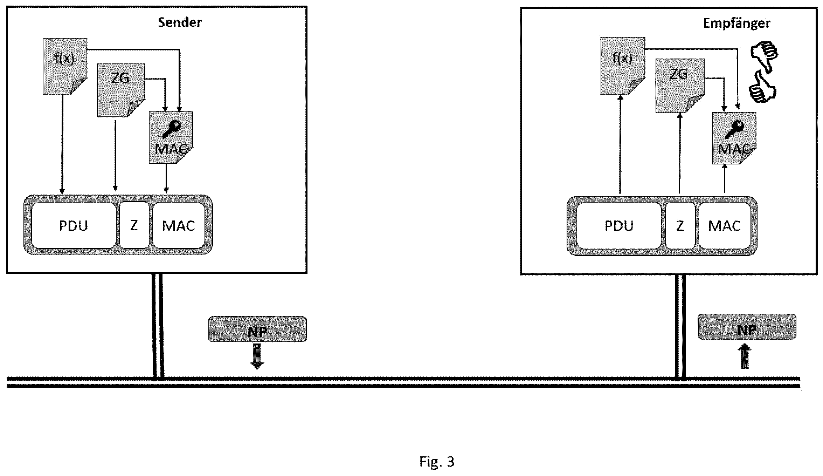

Figur 3 zeigt eine normale Steuergerätekommunikation bei Verwendung einer gesicherten Kommunikation.

In einem Sende-Steuergerät (Sender) werden durch die Applikationssoftware die zu übertragenden Nutzdaten PDU generiert (f(x)). Ferner sind ein Modul zur Zählerwertgenerierung ZG und ein Generator für den Authenticator MAC vorhanden. In den unteren Softwareschichten findet u.a. die Serialisierung statt und dort wird durch die COM-Konfiguration (Kommunikationsbeschreibung z.B. in Form der K-Matrix) festgelegt, welche Daten in der zu übertragenden Nachricht, bzw. in dem entsprechenden zu übertragenden Nachrichtenpaket NP, den Zählerwert Z darstellen und welche den Authenticator MAC. Entsprechend "verpackt" wird diese Nachricht dann von einem geeigneten Controller als Nachrichtenpaket NP auf dem Bus/Netzwerk verschickt. Auf dem Bus/Netzwerk kann bei den in dem serialisierten Nachrichtenpaket NP enthaltenen Daten ohne Kenntnis der K-Matrix oder ohne einen passenden Algorithmus zur Dateninterpretation nicht zwischen Nutzdaten PDU, Zählerwert Z und Authenticator MAC differenziert werden.

Beim Test von Steuergeräten, bspw. mit einem HIL für Echtzeittests oder mit einem Offline-Simulator zur virtuellen Absicherung, liegen in der Regel Informationen über die K-Matrix bzw. liegt die K-Matrix vor.

In Figur 3 empfängt das Empfangssteuergerät (Empfänger) die Nachricht und wertet sie in umgedrehter Reihenfolge wie beim Sender aus. Anhand einer Authenticator-Prüfung wird im Empfangssteuergerät entschieden, ob die empfangen Nutzdaten PDU für die Applikation, d.h. die entsprechende Funktion f(x) im Empfänger-Steuergerät, verwendet werden oder nicht.

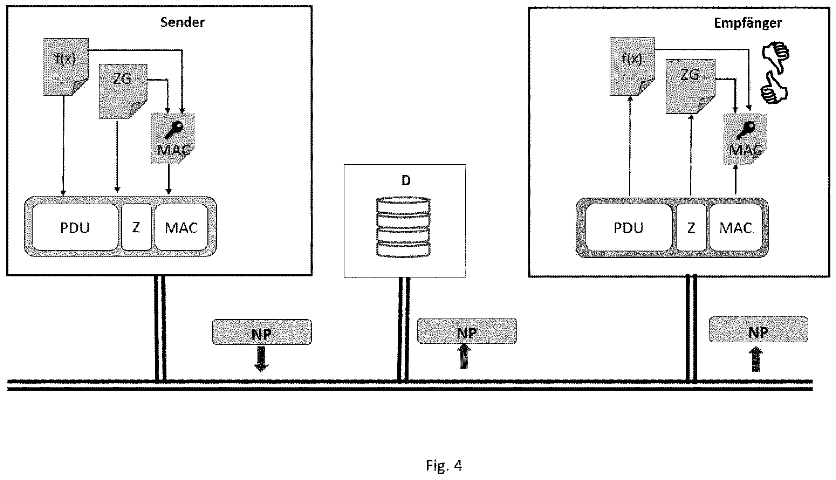

Sofern eine Kommunikation zwischen Steuergeräten für eine spätere Wiedergabe verwendet werden soll, wird die Kommunikation am Bus abgegriffen, bzw. bei einem Netzwerk mittels eines Switches oder Test Access Points gespiegelt. Dies ist in Figur 4 gezeigt. Zur Aufnahme wird typischerweise ein Datenlogger D verwendet, der die Daten auf einem Massenspeicher sammelt. Die Speicherung erfolgt dabei ohne eine Interpretation der Daten.

Bei ungeschützten Kommunikationen können die Daten für eine Stimulation des Empfangssteuergeräts mehr oder minder unverändert (evtl. Anpassung von Zeitstempeln) direkt an das Empfangssteuergerät versendet werden, ohne dass dieses eine Stimulation (Replay, d.h. reine Wiedergabe/erneutes Aufspielen von aufgezeichneten Nachrichten) detektieren kann.

Im Fall einer geschützten Kommunikation können die aufgenommen Daten aber nicht mehr ohne weitere Manipulation verwendet werden, da mittels des monotonen Zählers im Empfangssteuergerät detektieren würde, dass die Nachricht veraltet ist. Eine ausschließliche Änderung des Zählers würde jedoch auch keinen Erfolg bringen, da der Zählerwert zusammen mit den Nutzdaten in die Berechnung des Authenticators MAC eingeflossen ist.

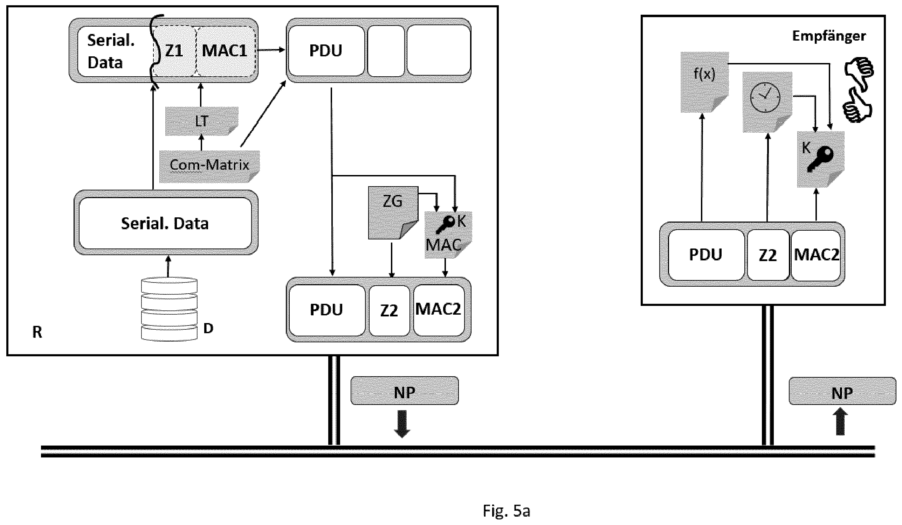

Figur 5a zeigt ein Ausführungsbeispiel des erfindungsgemäßen Verfahrens mit einer erfindungsgemäßen Wiedergabeeinheit R.

Die aufgenommenen Daten (gesicherte Nachrichten) werden von Massenspeicher D ausgelesen. Es handelt sich dabei um serialisierte Daten Serial. Data, d.h. vollkommen uninterpretierte Daten, bei denen nicht klar ist, wo die Signale liegen und wie sie codiert sind. Aus einer in dem Wiedergabegerät R vorhandenen oder eingelesenen (sehr umfangreichen) Kommunikationsmatrix Com-Matrix wird zu Beginn des erfindungsgemäßen Verfahrens eine deutlich weniger umfangreiche Lookup-Tabelle LT generiert, welche die Nachrichten-ID, die Position der Nutzdaten und die Länge der Nutzdaten enthält. Anhand der extrahierten Information aus der Lookup-Tabelle LT werden alle Daten außer den Nutzdaten PDU der Nachricht, d.h. insbesondere die Signale des ersten Zählerwerts Z1 und des ersten Authenticators MAC1 verworfen. Die verbliebenen noch serialisierten Daten (Serial. Data) müssen deserialisiert werden, um die Nutzdaten PDU zu erhalten und um diese für die zu versendende Nachricht wiederverwenden zu können, da die Nutzdaten PDU in die Berechnung des Authenticators einfließen. Die Menge der zu deserialisierenden Daten ist hier jedoch gegenüber den Daten der kompletten Nachricht auf die Nutzdaten PDU reduziert. Die Signale für den zweiten Zählerwert Z2 und den zweiten Authenticator MAC2 werden wie im Steuergerät oder bei der Bussimulation im HIL- oder Offline-Simulator auch im Wiedergabegerät R neu erzeugt. Zweiter Zählerwert Z2 und Schlüssel K werden dabei beispielsweise vom Nutzer bereitgestellt. Zusammen mit den Nutzdaten PDU wird daraus wieder eine valide Nachricht zusammengesetzt, welche dann nach der kompletten Serialisierung als Nachrichtenpaket NP über den Bus bzw. das Netzwerk versendet wird.

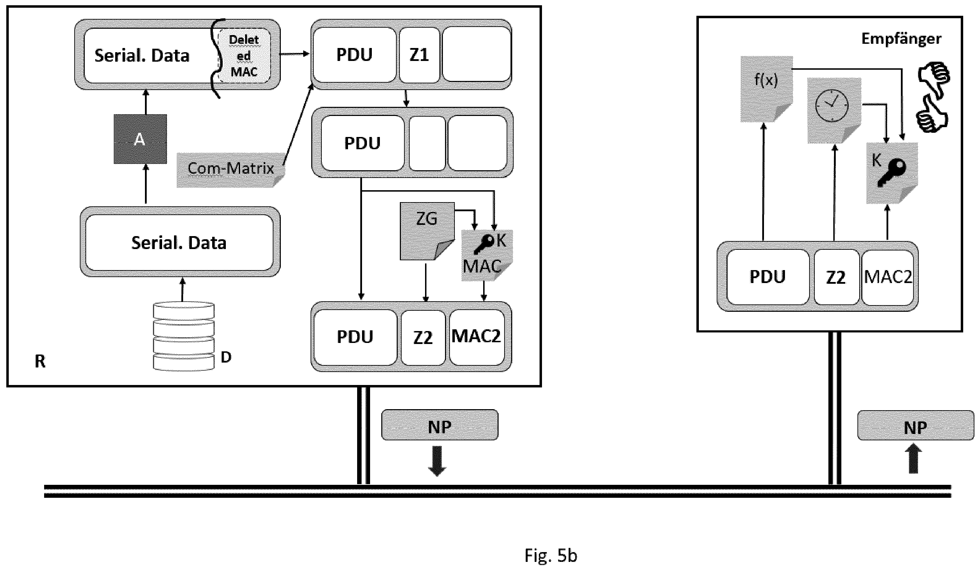

Eine weitere Ausführungsform der Erfindung ist in Fig. 5b gezeigt. Die Abweichungen gegenüber dem in Fig. 5a beschriebenen Verfahren sind folgende:
Zur Identifizierung der Position bestimmter Nachrichtenbestandteile in den noch serialisierten Nachrichten wird ein Algorithmus zur Dateninterpretation A angewendet. Dieser Algorithmus A bestimmt die Position verschlüsselter Daten innerhalb der Nachricht, indem er zusammenhängende Werte mit maximaler Entropie erkennt. Somit lässt sich der verschlüsselte Authenticator MAC bestimmen und verwerfen, um wiederum die Datenmenge in der Nachricht zu reduzieren. In einem weiteren Schritt werden dann die verbliebenen Daten der Nachricht deserialisiert, der Zähler Z1 identifiziert und entfernt. Anschließend läuft das Verfahren weiter wie in Fig. 5a ab.

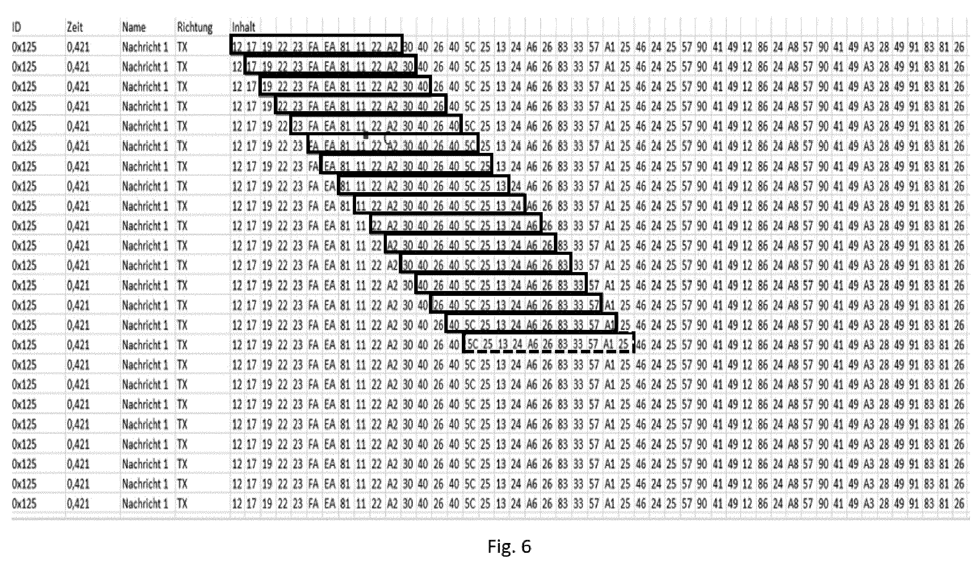

Fig. 6 verdeutlicht die Vorgehensweise des Algorithmus zur Dateninterpretation A. Zur Erkennung der verschlüsselten Information wird in den Daten der serialisierten Nachrichten mit einem Symbolfenster nach zusammenhängen Werten mit maximaler Entropie gesucht werden. Die Größe des für die Suche des ersten Authenticators genutzten Symbolfensters muss dabei nicht zwingend vorgegeben werden. Die Suche könnte prinzipiell mit unterschiedlich großen Symbolfenstern durchgeführt werden. In der Praxis werden jedoch nur bestimmte Authenticatorlängen verwendet (z.B. AES = 128 bit), eine solche wird bevorzugt als Länge des Symbolfensters genutzt. Für jedes der in der Fig. 6 aufgeführten Fenster wird die Entropie berechnet. Von dem Fenster mit der größten berechneten Entropie wird angenommen, dass sich dort die Position des Authenticators MAC1 befindet.

Gibt es zufällig zwei Fenster mit gleich großer Entropie, so kann eineerneute Anwendung des Algorithmus auf eine weitere Nachricht derselben ID eine Entscheidung herbeiführen.

Eine weitere Ausführungsform der Erfindung besteht darin, die Signale für den Zählerwert Z und den Authenticator MAC gezielt zu manipulieren, um die Absicherungsmaßnahmen im Empfangssteuergerät zu testen. So kann mit einem korrekten Zählerwert Z aber einem falschen Authenticator MAC gearbeitet werden, oder der Authenticator MAC ist korrekt und der Zählerwert Z ist falsch.

Bei anderen Sicherheitsmechanismen als der SecOC wird möglicherweise die Nachricht mit Nutzdaten, Zählerwert und Authenticator nicht in einem einzigen Nachrichtenpaket, sondern über mehrere Nachrichtenpakete verteilt verschickt, beispielsweise bei IPsec oder cryptographic PDUs. Das erfindungsgemäße Verfahren ist auch auf solche Verfahren anwendbar. Leichte Änderungen müssen dann eventuell bezüglich des Zählerwertes vorgenommen werden. Bei IPsec muss der Zählerwert - dort Sequenznummer genannt - beispielsweise nicht monoton steigend sein, sondern in einem bestimmten Fenster von Sequenznummern liegen ("sliding window").

## Patentansprüche

1. Verfahren zum Versenden aufgezeichneter gesicherter Nachrichten über ein Nachrichtensystem an ein zu testendes Empfängergerät, wobei die Nachrichten mittels serialisierter Nachrichtenpakete versendet werden, wobei das Verfahren folgende Schritte aufweist:
• Bereitstellen erster gesicherter und noch serialisierter Nachrichten aus Nachrichtenpaketen (NP), zur Verarbeitung in einer Wiedergabeeinheit (R), wobei die ersten Nachrichten durch die Nutzlast der Nachrichtenpakete (NP) gegeben sind und ihrerseits Nutzdaten (PDU), einen ersten Zählerwert (Z1) und einen ersten Authenticator (MAC1) aufweisen, wobei der Wiedergabeeinheit (R) folgende Informationen zur Verfügung gestellt sind:
∘ Mindestens Teile einer Kommunikationsbeschreibung (Com-Matrix) für das zu testende Empfängergerät und/oder ein Algorithmus zur Dateninterpretation (A),
∘ Ein zweiter Zählerwert (Z2) für das zu testende Empfängergerät,
∘ Informationen zur Verschlüsselung und ein entsprechender Schlüssel (K)
• mittels der Wiedergabeeinheit (R):
∘ in den ersten Nachrichten: Reduzieren der Datenmenge der serialisierten Nachrichten (Serial. Data) durch Identifizieren der Position der Nutzdaten (PDU) oder der Position des ersten Authenticators (MAC1) und Entfernen mindestens des ersten Authenticators (MAC1) und ggf. des ersten Zählerwerts (Z1) aus den gesicherten und serialisierten ersten Nachrichten
∘ Deserialisieren der reduzierten ersten Nachrichten und Erstellen zweiter gesicherter Nachrichten durch Hinzufügen jeweils des zweiten Zählerwerts (Z2), bzw. ggf. Ersetzten des ersten Zählerwertes (Z1) durch den zweiten Zählerwert (Z2), und Erstellen und Hinzufügen jeweils eines zweiten Authenticators (MAC2) unter Verwendung des zweiten Zählerwerts (Z2), der Informationen zur Verschlüsselung sowie des Schlüssels (K) und unter Verwendung der Kommunikationsbeschreibung (Com-Matrix) oder der mittels Anwendung des Algorithmus zur Dateninterpretation (A) gewonnenen Informationen,
• Serialisieren der zweiten gesicherten Nachrichten und Versenden entsprechender Nachrichtenpakete (NP) an das zu testende Empfängergerät.

2. Verfahren nach Anspruch 1, wobei das Identifizieren der Nutzdaten mittels einer aus der Kommunikationsbeschreibung erstellten Lookup-Tabelle (LT) erfolgt, wobei die Lookup-Tabelle (LT) die Nachrichten-ID, die Position der Nutzdaten (PDU) und die Länge der Nutzdaten (PDU) enthält.

3. Verfahren nach Anspruch 1, wobei das Identifizieren des ersten Authenticators dadurch erfolgt, dass die serialisierten Daten (Serial. Data) der Nachrichten mit Hilfe des Algorithmus zur Dateninterpretation (A) durchsucht werden, wobei der Algorithmus zur Dateninterpretation (A) auf der Erkennung verschlüsselter Informationen beruht, indem er zusammenhängende Werte mit maximaler Entropie ermittelt.

4. Verfahren nach Anspruch 3, wobei der Algorithmus in Hardware implementiert ist.

5. Verfahren nach einem der vorherstehenden Ansprüche, wobei eine Nachricht über mehrere Nachrichtenpakete (NP) verteilt versendet wird.

6. Verfahren nach einem der vorherstehenden Ansprüche, wobei das Empfängergerät ein reales Steuergerät ist oder ein virtuelles Steuergerät ist und wobei das Nachrichtensystem gegeben ist durch ein reales oder simuliertes Bus-Kommunikationssystem oder ein reales oder simuliertes Netzwerk oder eine Kombination aus Bussystem und Netzwerk, insbesondere durch ein automotives Nachrichtensystem.

7. Verfahren nach einem der vorherstehenden Ansprüche, wobei der zweite Zählerwert (Z2) jeweils durch den aktuellen Zählerwert für das zu testende Empfängergerät gegeben ist oder wobei der zweite Zählerwert (Z2) durch einen von einem Benutzer vorgegeben Zählerwert oder durch einen automatisch berechneten Zählerwert gegeben ist.

8. Verfahren nach Anspruch 1 oder 2, wobei auch die Nutzdaten (PDU) der ersten gesicherten Nachrichten unter Verwendung des ersten Zählerwerts (Z1) verschlüsselt sind und die Nutzdaten (PDU) in der Wiedergabeeinheit (R) entschlüsselt und mittels der Verschlüsselung und des zweiten Zählerwerts (Z2) wieder verschlüsselt werden.

9. Verfahren nach einem der vorstehenden Ansprüche, wobei die Informationen zur Verschlüsselung auch Informationen umfassen, um die zweiten gesicherten Nachrichten zu Testzwecken derart zu erstellen, dass sie vom Empfängergerät als fehlerhaft erkannt werden sollten.

10. Wiedergabeeinheit (R) zum Versenden gesicherter Nachrichten über ein Nachrichtensystem an ein zu testendes Empfängergerät, wobei die Wiedergabeeinheit (R) über das Nachrichtensystem mit dem zu testenden Empfängergerät verbunden ist, wobei die Wiedergabeeinheit (R) eingerichtet ist, wiederzugebende erste gesicherte und noch serialisierte Nachrichten aus der Nutzlast von aufgezeichneten Nachrichtenpaketen (NP) zu erhalten, in den ersten gesicherten noch serialisierten Nachrichten die Position der Nutzdaten (PDU) oder die Position eines ersten Authenticators (MAC1) zu identifizieren und den Authenticator (MAC1) und ggf. auch den entsprechenden Zählerwert (Z1) aus den serialisierten Nachrichten zu entfernen und mittels eines zweiten Zählerwerts (Z2), eines Verschlüsselungsalgorithmus und eines Schlüssels (K) einen zweiten Authenticator (MAC2) zu erzeugen,
und wobei die Wiedergabeeinheit (R) eingerichtet ist, durch Hinzufügen des zweiten Authenticators (MAC2) zu den ersten Nachrichten und durch Hinzufügen des zweiten Zählerwerts (Z2), bzw. Ersetzen des ersten Zählerwerts (Z1) durch den zweiten Zählerwert (Z2), zweite gesicherte Nachrichten zu erzeugen und wobei die Wiedergabeeinheit (R) weiter eingerichtet ist, die zweiten gesicherten Nachrichten in entsprechenden Nachrichtenpaketen (NP) über das Nachrichtensystem an das zu testende Empfängergerät zu versenden.

11. Wiedergabeeinheit (R) nach Anspruch 10, wobei die Wiedergabeeinheit (R) als (Zusatz-)Einheit für einen Hardware-in-the-Loop (HIL)-Simulator und/oder für einen Simulator zur virtuellen Absicherung ausgestaltet ist.

## Claims

1. A method for sending recorded secured messages via a messaging system to a recipient device under test, the messages being sent by means of serialized message packets, wherein the method comprises the following steps:
• providing first secured and still serialized messages from message packets (NP) for processing in a playback unit (R), wherein the first messages are defined by the payload of the message packets (NP) and in turn comprise payload data (PDU), a first counter value (Z1), and a first authenticator (MAC1), wherein the following information is made available to the playback unit (R):
o at least parts of a communication description (Com-Matrix) for the receiving device under test and/or a data interpretation algorithm (A),
o a second counter value (Z2) for the receiving device under test,
o information for encrypting and a corresponding key (K)
• by means of the playback unit(R):
∘ in the first messages: reducing the data volume of serialized messages (Serial. Data) by identifying the position of the payload data (PDU) or the position of the first authenticator (MAC1) and removing at least the first authenticator (MAC1) and optionally the first counter value (Z1) from the secured and serialized first messages
∘ deserializing the reduced first messages and creating second secured messages by adding the second counter value (Z2) in each case or optionally replacing the first counter value (Z1) with the second counter value (Z2) and creating and adding a second authenticator (MAC2) in each case by using the second counter value (Z2), the information for encrypting, and the key (K), and by using the communication description (Com-Matrix) or the information obtained by means of applying the data interpretation algorithm (A),
• serializing the second secured messages and sending corresponding message packets (NP) to the receiving device under test.

2. The method according to claim 1, wherein the payload data is identified by means of a lookup table (LT) created from the communication description, wherein the lookup table (LT) contains the message ID, the position of the payload data (PDU) and the length of the payload data (PDU) .

3. The method according to claim 1, wherein the identifying of the first authenticator is performed by the fact that the serialized data (Serial. Data) of the messages are searched using the data interpretation algorithm (A), wherein the data interpretation algorithm (A) is based on the recognition of encrypted information by determining related values having maximum entropy.

4. The method according to claim 3, wherein the algorithm is implemented in hardware.

5. The method according to any one of the preceding claims, wherein a message is sent distributed over a plurality of message packets (NP).

6. The method according to any one of the preceding claims, wherein the receiving device is a real control device or is a virtual control device and wherein the message system is given by a real or simulated bus communication system or a real or simulated network or a combination of bus system and network, in particular by an automotive messaging system.

7. The method according to any one of the preceding claims, wherein the second counter value (Z2) is given in each case by the current counter value for the receiving device under test or wherein the second counter value (Z2) is given by a counter value specified by a user or by an automatically calculated counter value.

8. The method according to claim 1 or 2, wherein the payload data (PDU) of the first secured messages is also encrypted by using the first counter value (Z1) and the payload data (PDU) is decrypted in the playback unit (R) and is again encrypted by means of the encryption and the second counter value (Z2).

9. The method according to any one of the preceding claims, wherein the information for encrypting also comprises information for creating the second secured messages for test purposes such that said messages should be identified as defective by the receiving device.

10. A playback unit (R) for sending secured messages via a messaging system to a receiving device under test, the playback unit (R) being connected via the messaging system to the receiving device under test, wherein the playback unit (R) is configured to receive first secured and still serialized messages to be played back from the payload of recorded message packets (NP), to identify the position of the payload data (PDU) or the position of a first authenticator (MAC1) in the saved first still serialized messages, and to remove the authenticator (MAC1) and optionally also the corresponding counter value (Z1) from the serialized messages and to generate a second authenticator (MAC2) by means of a second counter value (Z2), an encryption algorithm and a key (K),
and wherein the playback unit (R) is configured to generate second secured messages by adding the second authenticator (MAC2) to the first messages and by adding the second counter value (Z2), or by replacing the first counter value (Z1) with the second counter value (Z2), and wherein the playback unit (R) is further configured to send the second secured messages in corresponding message packets (NP) via the messaging system to the receiving device under test.

11. The playback unit (R) according to claim 10, wherein the playback unit (R) is implemented as an (accessory) unit for a hardware-in-the-loop (HIL) simulator and/or for a simulator for virtual validation.

## Revendications

1. Procédé pour envoyer des messages sécurisés enregistrés par l'intermédiaire d'un système de messagerie à un appareil récepteur à tester, les messages étant envoyés au moyen de paquets de messages sérialisés, le procédé comprenant les étapes suivantes :
• fourniture de premiers messages sécurisés et encore sérialisés à partir de paquets de messages (NP) en vue du traitement dans une unité de restitution (R), les premiers messages étant donnés par la charge utile des paquets de messages (NP) et possédant de leur côté des données utiles (PDU), une première valeur de compteur (Z1) et un premier authentificateur (MAC1), les informations suivantes étant fournies à l'unité de restitution (R):
o au moins des parties d'une description de communication (matrice Com) pour l'appareil récepteur à tester et/ou un algorithme d'interprétation des données (A),
o une deuxième valeur de compteur (Z2) pour l'appareil récepteur à tester,
o des informations sur le chiffrement et une clé correspondante (K),
• au moyen de l'unité de restitution (R):
o dans les premiers messages: réduction de la quantité de données des messages sérialisés (Serial. Data) par identification de la position des données utiles (PDU) ou de la position du premier authentificateur (MAC1) et suppression d'au moins le premier authentificateur (MAC1) et, le cas échéant, de la première valeur de compteur (Z1) des premiers messages sécurisés et sérialisés
o désérialisation des premiers messages réduits et création de deuxièmes messages sécurisés par ajout, à chaque fois, de la deuxième valeur de compteur (Z2) ou, le cas échéant, remplacement de la première valeur de compteur (Z1) par la deuxième valeur de compteur (Z2), et création et ajout, à chaque fois, d'un deuxième authentificateur (MAC2) par utilisation de la deuxième valeur de compteur (Z2), des informations de chiffrement ainsi que de la clé (K) et par utilisation de la description de communication (matrice Com) ou des informations obtenues par utilisation de l'algorithme d'interprétation de données (A),
• sérialisation des deuxièmes messages sécurisés et envoi de paquets de messages (NP) correspondants à l'appareil récepteur à tester.

2. Procédé selon la revendication 1, l'identification des données utiles étant effectuée au moyen d'une table de recherche (LT) établie à partir de la description de communication, la table de recherche (LT) contenant l'ID de message, la position des données utiles (PDU) et la longueur des données utiles (PDU).

3. Procédé selon la revendication 1, l'identification du premier authentificateur étant effectuée en ce sens que les données sérialisées (Serial. Data) des messages sont explorées à l'aide de l'algorithme d'interprétation de données (A), l'algorithme d'interprétation de données (A) étant basé sur la détection d'informations chiffrées en déterminant des valeurs contiguës présentant une entropie maximale.

4. Procédé selon la revendication 3, l'algorithme étant mis en œuvre dans un matériel.

5. Procédé selon l'une des revendications précédentes, un message étant envoyé réparti sur plusieurs paquets de messages (NP).

6. Procédé selon l'une des revendications précédentes, l'appareil récepteur étant un appareil de commande réel ou étant un appareil de commande virtuel et le système de messagerie étant constitué par un système de communication par bus réel ou simulé ou un réseau réel ou simulé ou une combinaison de système de bus et de réseau, en particulier par un système de messagerie automobile.

7. Procédé selon l'une des revendications précédentes, la deuxième valeur de compteur (Z2) étant donnée à chaque fois par la valeur de compteur actuelle pour l'appareil récepteur à tester ou la deuxième valeur de compteur (Z2) étant donnée par une valeur de compteur allouée par un utilisateur ou par une valeur de compteur calculée automatiquement.

8. Procédé selon la revendication 1 ou 2, les données utiles (PDU) des premiers messages sécurisés étant également chiffrées par utilisation de la première valeur de compteur (Z1) et les données utiles (PDU) étant déchiffrées dans l'unité de restitution (R) et chiffrées à nouveau cryptées au moyen du chiffrement et de la deuxième valeur de compteur (Z2).

9. Procédé selon l'une des revendications précédentes, les informations pour le chiffrement comprenant également des informations pour créer les deuxièmes messages sécurisés à des fins de test de sorte qu'ils devraient être reconnus comme erronés par l'appareil récepteur.

10. Unité de restitution (R) destinée à envoyer des messages sécurisés par l'intermédiaire d'un système de messagerie à un appareil récepteur à tester, l'unité de restitution (R) étant connectée à l'appareil récepteur à tester par l'intermédiaire du système de messagerie, l'unité de restitution (R) étant conçue pour recevoir de premiers messages sécurisés à restituer, encore sérialisés, à partir de la charge utile de paquets de messages (NP) enregistrés, dans les premiers messages sécurisés encore sérialisés, identifier la position des données utiles (PDU) ou identifier la position d'un premier authentificateur (MAC1) et supprimer l'authentificateur (MAC1) et éventuellement aussi la valeur de compteur (Z1) correspondante des messages sérialisés et générer un deuxième authentificateur (MAC2) au moyen d'une deuxième valeur de compteur (Z2), d'un algorithme de chiffrement et d'une clé (K),
et l'unité de restitution (R) étant conçue pour générer de deuxièmes messages sécurisés par ajout du deuxième authentificateur (MAC2) aux premiers messages et par ajout de la deuxième valeur de compteur (Z2), ou par remplacement de la première valeur de compteur (Z1) par la deuxième valeur de compteur (Z2), et l'unité de restitution (R) étant en outre conçue pour envoyer, à l'appareil récepteur à tester, par l'intermédiaire du système de messagerie, les deuxièmes messages sécurisés dans des paquets de messages (NP) correspondants.

11. Unité de restitution (R) selon la revendication 10, l'unité de restitution (R) étant configurée comme une unité (supplémentaire) pour un simulateur « matériel dans la boucle » (HIL) et/ou pour un simulateur destiné à une sécurisation virtuelle.
